(19) Europäisches Patentamt
European Patent Office
Office européen des brevets

(11) Veröffentlichungsnummer: **0 115 067**
**B1**

(12) # EUROPÄISCHE PATENTSCHRIFT

(45) Veröffentlichungstag der Patentschrift: **09.03.88**

(21) Anmeldenummer: **83113088.5**

(22) Anmeldetag: **24.12.83**

(51) Int. Cl.[4]: **C 08 F 212/12**, G 11 B 7/26 // (C08F212/12, 220:30, 220:18, 220:12, 212:04)

(54) **Polymerisate mit geringer Wasseraufnahme.**

(30) Priorität: **30.12.82 DE 3248601**

(43) Veröffentlichungstag der Anmeldung: **08.08.84 Patentblatt 84/32**

(45) Bekanntmachung des Hinweises auf die Patenterteilung: **09.03.88 Patentblatt 88/10**

(84) Benannte Vertragsstaaten: **DE FR GB IT NL**

(56) Entgegenhaltungen:
**DE - A - 2 053 901**
**GB - A - 2 089 523**

**PATENTS ABSTRACTS OF JAPAN, Band 7, Nr. 160 (P-210)[1305], 14. Juli 1983**

(73) Patentinhaber: **Röhm GmbH, Kirschenallee Postfach 4242, D-6100 Darmstadt 1 (DE)**

(72) Erfinder: **Wenzel, Franz, Dr., Zeyherweg 5, D-6100 Darmstadt (DE)**
Erfinder: **Arndt, Peter Joseph, Dr., Im Säbchen 9, D-6104 Seeheim-Jugenheim 2 (DE)**
Erfinder: **Siol, Werner, Dr., Goerdelerweg 34, D-6100 Darmstadt-Eberstadt (DE)**

**EP 0 115 067 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gebiet der Erfindung

Die Erfindung betrifft Polymerisate mit geringer Wasseraufnahme, die als Formmasse besonders geeignet sind.

Stand der Technik

Unter den Parametern, die üblicherweise bei der Ermittlung der technischen Eignung eines Kunststoffs berücksichtigt werden, spielt Wasseraufnahme der Kunststoffe im allgemeinen keine oder höchstens eine untergeordnete Rolle. Ausnahmen bilden ausgesprochen feuchtigkeitsempfindliche Polymere wie Polyvinylbutyral. Für die Mehrheit der Anwendungszwecke stellt die (meist relativ geringe) Wasseraufnahme kein Problem dar. Polymethylmethacrylat (PMMA) hat eine nicht zu vernachlässigende Wassersättigungskonzentration von ca. 2%.

Bei PMMA treten gelegentlich Schwierigkeiten dann auf, wenn Wasser auf relativ dünnes Material ungleichmässig einwirkt, z.B. bei Aquarien mit zu dünnen Wandstärken. Die Materialien können auf ungleichmässige Wasseraufnahme bzw. die Ausbildung eines Feuchtigkeitsgradienten mit Verziehen oder Durchbiegen reagieren.

In der DE-A 3 028 498 wird auf die Probleme hingewiesen, welche durch die Ausbildung eines Feuchtigkeitsgradienten bei optisch abzulesenden Informationsspeicherplatten auf Basis von PMMA hervorgerufen werden können. Die genannte DE-A löst das Problem dadurch, dass bei der Umformung und den anschliessenden Bearbeitungsschritten die Wasseraufnahme des PMMA minimiert wird. Die unerwünschten Wirkungen einer uneinheitlichen Wasseraufnahme bei Informationsspeicherplatten («Regenschirmeffekt»), stehen auch im Mittelpunkt der US-PS 4 310 919. Die Lösung des Problems sieht die US-PS in der völlig symmetrischen Gestaltung der Informationsspeicherplatten.

Die vorgeschlagenen Lösungen sind erkennbar darauf gerichtet, die Ausbildung eines Feuchtigkeitsgradienten zu verhindern bzw. seine Wirkung intern zu kompensieren.

Aufgabe

Es bestand daher ein Bedürfnis nach einem Polymermaterial, dessen optische und mechanische Eigenschaften die Verwendung als Informationsträger gestatten und das im Hinblick auf die Wasseraufnahme unproblematisch ist.

Lösung

Zur Lösung der vorliegenden Aufgabe werden die erfindungsgemäss hergestellten Polymerisate empfohlen. Es handelt sich erfindungsgemäss um Polymerisate mit geringem Wasseraufnahmevermögen und guten optischen und mechanischen Eigenschaften, die

A) 10–90 Gew.-% p-Methylstyrol, zusammen mit mindestens einer der folgenden Komponenten B, C, D, E, F, gegebenenfalls zusätzlich G enthalten, wobei die Mengenangaben dieser Komponenten wie folgt sind:

B) 0–50 Gew.-% eines oder mehrerer aromatische Gruppen enthaltender Monomeren der Formel I

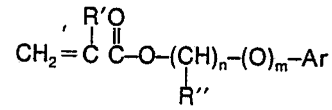

I

worin

R′ für Wasserstoff oder Methyl

R″ für Wasserstoff oder einen Alkylrest mit 1 bis 7 Kohlenstoffatomen

Ar für einen aromatischen Kohlenwasserstoff, vorzugsweise einen gegebenenfalls substituierten Phenylrest

n für eine Zahl von 0–6

m für 0 oder 1 mit der Massgabe, dass m und n nicht gleichzeitig 1 sein sollen, und wenn n für 0 steht, auch m für 0 stehen soll,

C) 0–20 Gew.-% einer oder mehrerer aromatischer Vinylverbindungen der Formel II

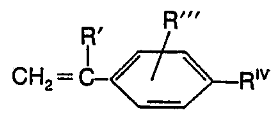

II

worin

R′ für Wasserstoff oder Methyl

R‴ für Wasserstoff oder einen Alkylrest mit 1 bis 4 Kohlenstoffatomen und

$R^{IV}$ für Wasserstoff oder einen Alkylrest mit 2 bis 4 Kohlenstoffatomen stehen.

D) 0–80 Gew.-% Methylmethacrylat,

E) 0–50 Gew.-% eines oder mehrerer Monomerer der Formel III

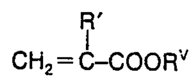

III

worin

R′ die oben bezeichnete Bedeutung besitzt und

$R^V$ für einen gegebenenfalls verzweigten Kohlenwasserstoffatomen oder einen cyclischen, nichtaromatischen Kohlenwasserstoff mit mindestens 5 Ringkohlenstoffatomen und bis zu 12 Kohlenstoffatomen mit der Massgabe, dass R′ und $R^V$ nicht gleichzeitig für Methyl stehen sollen,

F) 0–30 Gew.-%, vorzugsweise 0,5–20 Gew.-%, weiterer Comonomerer, deren Löslichkeit den Wert 50 g Monomer pro Liter Wasser bei 25 °C nicht überschreitet und

G) 0–10 Gew.-%, vorzugsweise 0,1–7 Gew.-%, weiterer (von den Monomeren A–F verschiedener) die Polymerkohäsion fördernder Monomerer

Besonders bevorzugt sind die Polymerisate mit einem Anteil von 20–80 Gew.-% an p-Methylstyrol (p-MS), (Komponente A).

Von besonderer Bedeutung im Zusammenhang der vorliegenden Aufgabe ist die gute Copolymerisierbarkeit mit (Meth)-acrylsäureestern, allen voran mit Methylmethacrylat (MMA). (Komponente D).

Besonders vorteilhaft sind Copolymerisate von MMA mit p-MS.

Die Polymerisate können ferner noch Anteile an den Polymerisaten von Typ der Komponenten B, C, E, F, G enthalten. Vorzugsweise liegt die Summe der Monomeren vom Typ der Komponenten B, D, und E im Bereich 10–90 Gew.-%, vorzugsweise 20–80 Gew.-%, bezogen auf die Gesamtheit der Monomeren (= 100 Gew.-%). Genannt seien als aromatische Gruppen enthaltende Monomere vom Typ B, beispielsweise solche, in denen Ar für gegebenenfalls substituiertes, insbesondere alkyliertes Phenyl steht. Unter alkyliertem Phenyl sei insbesondere ein mit $C_1$–$C_4$-Alkylresten substituiertes Phenyl verstanden. Von Interesse sind auch die entsprechenden Alkylphenylether. Erwähnt seien z.B. Phenylacrylat und -methacrylat, Benzylmethacrylat und -acrylat, Xylylenmethacrylat und -acrylat (insbesondere die m-Form), 4-Methylphenylmethacrylat und -acrylat, 2-Phenylethylmethacrylat und -acrylat, 3-Phenyl-1-propylmethacrylat und -acrylat, 2-Phenyloxyethylacrylat und -methacrylat.

Die Monomeren vom Typ B (Formel I) können die Komponente A = p-Methylstyrol teilweise ersetzen. In der Regel liegt ihr Anteil unter 50, vorzugsweise bei 0,5 bis 20 Gew.-%, bezogen auf die Gesamtheit der Monomeren.

Als Monomere vom Typ C sind substituierte Derivate des Styrols bzw. Styrol selbst zu nennen, so z.B. p-Ethylstyrol, m- bzw. o-Methylstyrol, α-Methylstyrol und andere alkylsubstituierte Monomere. In der Regel liegt der Anteil dieser Monomeren unter 20 Gew.-%, bevorzugt bei > 0,5 und < 10 Gew.-%, bezogen auf die Gesamtheit der Monomeren. Insbesondere genannt sei hier m-Methylstyrol.

Die Gesamtheit der aromatischen Monomeren soll mindestens 10 Gew.-%, vorzugsweise mindestens 20 Gew.-% (bezogen auf die Gesamtheit der Monomeren) ausmachen. Die übrigen Monomer-Komponenten E–G können insbesondere zur Beeinflussung der mechanischen Eigenschaften und/oder der thermischen Beständigkeit copolymerisiert werden. Im allgemeinen liegt die Summe ihrer Anteile unter 50 Gew.-%, in der Regel unter 40 Gew.-% (bezogen auf die Gesamtheit der Monomeren). Von Interesse sind die Ester der Formel III, worin $R^V$ für einen Butylrest, insbesondere einen Isobutylrest, einen Isopropyl-, n-Propyl-, Ethyl-, Methylrest oder einen Cyclohexylrest steht.

Unter den gegebenenfalls vorhandenen Monomeren vom Typ F sind von A–E verschiedene Monomere mit einer Löslichkeit von < 50 g Monomer pro Liter Wasser bei 25 °C zu verstehen. Die Monomeren vom Typ F stellen an sich bekannte Vinyl-Monomeren dar, die vorzugsweise durch die Formel IV wiedergegeben werden können:

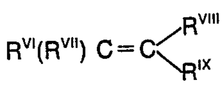

IV

worin

$R^{VI}$ und $R^{VII}$ für Wasserstoff oder Chlor,

$R^{VIII}$ für Wasserstoff oder Methyl,

$R^{IX}$ für einen Rest $-CH_3$, $-CH=CH_2$; $CCl=CH_2$ $-O-C-R^X$, wobei $R^X$ einen Alkylrest mit 2 bis 14 Kohlenstoffatomen bedeutet, steht

oder worin $R^{VI}$ gleichzeitig mit $R^{VIII}$ oder $R^{IX}$ für einen Rest $-COOR^{XI}$ steht, wobei $R^{XI}$ einen Alkylrest mit 1 bis 6 Kohlenstoffatomen bedeutet und die jeweils anderen Reste die oben angegebenen Bedeutungen beibehalten oder worin $R^{VIII}$ für einen Rest $-COOR^{XI}$ und gleichzeitig $R^{IX}$ für einen Rest $-CH_2-COOR^{XI}$ steht und die jeweils anderen Reste die oben angegebenen Bedeutungen beibehalten. Die Monomeren vom Typ F tragen besonders zur Verbesserung der mechanischen Eigenschaften, insbesondere der Flexibilität bei. Insbesondere seien Olefine wie Butadien, Isopren, Isobutylen, Ester wie Itacon-, Malein- und Fumarsäureester, insbesondere deren Methyl- und Ethylester ferner Vinylidenchlorid sowie Vinylester von Carbonsäuren mit mehr als 2 Kohlenstoffatomen genannt. Ihr Anteil liegt bei 0–30 Gew.-%, vorzugsweise bei 0,5–20 Gew.-%, bezogen auf das Gesamtpolymerisat. Darüber hinaus können zu geringen Anteilen (im allgemeinen weniger als 10 Gew.-%) von A–F verschiedene, die Polymerkohäsion fördernde Monomere enthalten sein. Sie gehören insbesondere der Gruppe des Methacrylnitrils und des Acrylnitrils sowie der der vernetzenden Monomeren an. Die vernetzenden Monomeren besitzen üblicherweise mehr als eine radikalisch polymerisierbare Einheit im Molekül. Genannt seien z.B. Divinylbenzol, Acryl- und Methacrylsäureester von Polyolen, beispielsweise Butandioldimethacrylat, ferner Vinyl-, Allyl- und Crotylester der Acryl- und/oder der Methacrylsäure.

Die Verwendung der Comonomeren vom Typ F empfiehlt sich speziell, wenn das resultierende Polymerisat relativ unempfindlich gegenüber organischen Lösungsmitteln sein soll. Die Wahl der Monomeren aus B–G erfolgt in der Regel so, dass die Glastemperatur des resultierenden Polymerisats 70 °C, insbesondere 85 °C nicht überschreitet. [Vgl. Kunststoff-Handbuch, Herausgeber B. Vieweg und F. Esser, Bd. IX, Hanser-Verlag, 1975, pp. 333–40, und T.G. Fox, Bull. Am. Phys. Soc. 1, 125, (1956)]. Ebenso ist der Anteil von hydrophilen Monomeren gering (z.B. < 10 Gew.-%) zu halten, so dass die Wasseraufnahme des Polymerisats niedrig ist.

Vorteilhafte Eigenschaften

Die erfindungsgemässen Polymerisate zeichnen sich durch eine sehr geringe Wasseraufnahme aus.

Die Bestimmung der Wasseraufnahme kann z.B. an den aus den Polymerisaten hergestellten Formkörpern vorgenommen werden. Besonders vorteilhaft wird die Bestimmung der Wasseraufnahme jedoch an den Polymerisaten, beispielsweise direkt an Perl-polymerisaten bzw. an auf eine Korngrösse von < 1 mm zerkleinertem Polymerisat durchgeführt.

Als Wasserabsorption in dem im Rahmen der vorliegenden Erfindung verwendeten quantitativen Sinne sei die maximale Gewichtszunahme eines gegebenen Polymerisats (ausgehend vom trockenen Zustand desselben) im Norm-Klima [83% relative Luftfeuchtigkeit bei 23 °C gemäss DIN 50 015 – (feucht)] nach 24 Stunden verstanden. Nach den vorliegenden Beobachtungen reichen diese Bedingungen in jedem Falle zur Erreichung der maximalen Gewichtsaufnahme aus.

Die Wasseraufnahme der nach vorliegender Anmeldung hergestellter Polymerisaten soll (unter den Bedingungen von DIN 50 015) unterhalb 1 Gew.%, vorzugsweise unterhalb 0,8 Gew.%, besonders bevorzugt unterhalb 0,5 Gew.% liegen.

Der trockene Ausgangszustand der Polymerisat-Proben war durch 24-stündiges Trocknen bei 60 °C hergestellt worden. Nach 24 Stunden Lagerung im Normklima wurde der Wassergehalt zusätzlich durch Karl-Fischer-Titration festgestellt. In der Regel stimmten Gewichtszunahme und Wasserwerte nach Karl-Fischer gut überein. (Vgl. Tabelle I).

Die Praxis lehrt, dass aufgrund der grossen Oberfläche der Perlpolymerisate bzw. der zerkleinerten Substanzpolymerisate die Sättigungskonzentration unter Normbedingungen in diesen Fällen schon nach 6 Stunden erreicht wird. Die mechanischen Eigenschaften der erfindungsgemässen Polymerisate sind im allgemeinen voll befriedigend. So liegt die Schlagzähigkeit eines Copolymerisates aus 50 Gew.-% p-Methylstyrol und 50 Gew.-% Methylmethacrylat (z.B. Polymerisat gemäss Beispiel 4) bei 12 mm $N/mm^2$, die Vicat-Erweichungstemperatur (nach DIN 53 460) beträgt 99 °C, darüber hinaus zeigt das Material hervorragende Lichtdurchlässigkeit. Die Dichte dieses Copolymerisats beträgt 1,10 $g/cm^3$.

Die erfindungsgemässen Polymerisate bieten sich für eine Reihe von Anwendungen an, insbesondere solchen, bei denen eine geringe Wasseraufnahme, gekoppelt mit guten optischen und mechanischen Eigenschaften erforderlich sind.

Die Kombination dieser Eigenschaften: Geringe Wasseraufnahme und gute optische Eigenschaften vereint mit guten mechanischen Eigenschaften und einem geringen spez. Gewicht bedingt den besonderen Nutzen der p-Methylstyrol-haltigen Polymerisate.

Wie bereits erwähnt, gelten diese Anforderungen besonders für Träger optisch abzulesender Information, insbesondere optischer Speicherplatten.

Die Polymerisate eignen sich speziell für die Herstellung derartiger Informationsträger, insbesondere optischer Speicherplatten. Die erfindungsgemässen Polymerisate eignen sich in hervorragender Weise auch zur Herstellung von Datenspeicherplatten, speziell der unter der Bezeichnung DOR (Digital Optical Recording) bekannten Typen. Die Speicherdichte bei derartigen Platten ist gewöhnlich sehr hoch, sie kann z.B. im Bereich von $10^9$–$10^{11}$ bits liegen. Die Verarbeitung kann dabei in an sich bekannter Weise, z.B. durch Giessen oder über Formmasse erfolgen. Hingewiesen sei z.B. auf die Möglichkeit, derartige Informationsspeicherplatten durch Extrusion oder insbesondere durch Spritzgiessen herzustellen. Darüber hinaus können die als Träger optisch abzulesender Informationsspeicherplatten auch direkt durch Polymerisation des p-Methylstyrol bzw. der p-Methylstyrol haltigen Monomermischungen hergestellt werden.

Herstellung der Polymerisate

Die erfindungsgemässen Polymerisate werden durch radikalische Polymerisation nach an sich bekannten Verfahren hergestellt.

Die Polymerisation des p-Methylstyrols bzw. der p-Methylstyrol haltigen Copolymeren kann prinzipiell mittels der bekannten Polymerisationsverfahren durchgeführt werden, so z.B. durch Polymerisation in Substanz, in Suspension, in Emulsion oder in Lösung.

Die Isolierung der Polymerisatfeststoffe erfolgt bei der Polymerisation in Suspension z.B. durch einfaches Abfiltrieren der Perlen mit nachfolgendem Waschen und Trocknen, bei der Polymerisation in Emulsion z.B. durch Füllung, Gefrierkoagulation oder durch Sprühtrocknung. Die Gewinnung des Polymerisatfeststoffes aus der Lösungspolymerisation kann z.B. durch Ausfällen in einem Nicht-Lösungsmittel, z.B. Methanol, erfolgen.

Besonders bevorzugt wird die Polymerisation in Masse und in Suspension, da hier ein direkter Zugang zum festen Polymerisat gegeben ist.

Besonders bei Polymerisaten mit einem hohen Gehalt an para-Methylstyrol kann es von Vorteil sein, nicht bis zu vollständigem Umsatz sondern bis ca. 80% zu polymerisieren, um das Ausbilden von Verzweigungen zu vermeiden. Die Gewinnung des Polymerisates erfolgt dann beispielsweise durch Ausfällen in einem Nicht-Lösungsmittel oder durch Entgasen.

In der Regel erfolgt die Polymerisation mittels radikalischer Initiatoren, z.B. mittels organischer Peroxide und Perester wie z.B. Dibenzoylperoxid bzw. t-Butyl-per-2-Ethylhexanoat oder aber durch Azoverbindungen wie z.B. Azo-iso-butyronitril u.a. Initiatoren mehr.

Zur Einstellung des Molekulargewichtes wurden im allgemeinen Polymerisationsregler z.B. t-Dodecylmercaptan, 2-Ethylhexylthioglykolat u.a. mehr verwendet.

Ganz allgemein kommen die Polymerisationsverfahren zur Anwendung, wie sie für Styrol und dessen Copolymerisation mit anderen Monomeren bekannt sind. Vgl. auch Houben-Weyl, Methoden der Organischen Chemie, 4. Auflage, Band 14/1.

Herstellung von Formkörpern als Träger optisch abzulesender Information und Herstellung von optisch abzulesenden Informations-Speicherplatten

Zur Herstellung von Formkörpern als Träger optisch abzulesender Information können das p-Methylstyrol bzw. die p-Methylstyrol haltigen Monomerenmischungen direkt thermisch oder mit Hilfe eines Initiators und gegebenenfalls mit Hilfe einer Redoxkomponente polymerisiert werden.

Dabei kann u.U. auch von einem Monomer/Polymer System ausgegangen werden. Im allgemeinen wird jedoch die Herstellung der Formkörper durch Pressen, durch Spritzguss oder aber durch Extrusion und anschliessendes Herauslösen des Formkörpers erfolgen. Darüber hinaus sind auch gepresste Formteile herstellbar. Damit ergibt sich ein Verarbeitungsprofil der Formmasse. Während das Polymerisat einerseits gut zu verarbeiten sein sollte – was ein möglichst kleines Molekulargewicht bedingt – sollte der Polymerisationsgrad ein gewisses Mindestmass nicht unterschreiten, da das Material dann zu spröde wird. In der Regel sind daher Molekulargewichte von > 50 000, insbesondere von > 70 000 erforderlich. Dabei ist jedoch darauf zu achten, dass besonders beim Einsatz der Massen in der Extrusion oder im Spritzguss, die Molekulargewichte nicht zu gross werden sollten, beispielsweise $\geqslant 10^6$, da dann verstärkt Doppelbrechung auftreten kann. Speziell für die Anwendung als optisch abzulesendes Datenspeichermaterial ist eine minimale Lichtdurchlässigkeit erforderlich. Diese richtet sich naturgemäss nach der z.B. zum Abruf der gespeicherten Daten verwendeten Lichtart. Es ist demnach selbstverständlich, dass das zugrundeliegende Material eine äusserst geringe Eigenabsorption haben sollte. Ganz allgemein kann gesagt werden, dass die Lichtdurchlässigkeit des Materials – gemessen an einer 3 mm dicken Platte – 80%, insbesondere jedoch 85% überschreiten sollte. (Die Messung der Lichtdurchlässigkeit wird nach DIN 5036 vorgenommen).

Die Doppelbrechung der aus den Polymerisaten der vorliegenden Anmeldung hergestellten Formkörpern soll niedrig sein, d.h. der Gangunterschied sollte unterhalb 100 nm, vorzugsweise 30 nm liegen.

Die folgenden Beispiele dienen der Erläuterung der Erfindung, sollen jedoch keine Einschränkung sein.

Die Vicat-Erweichungstemperaturen werden nach DIN 53 460 bzw. IS 306 bestimmt.

Beispiel 1 Polymerisation in Perlform

Für die Perlpolymerisation des p-Methylstyrol bzw. der p-Methylstyrol haltigen Monomergemische gelten die Angaben in Houben-Weyl, Methoden der organischen Chemie, Band 14/1, Kap. II (4. Auflage).

Ausser hochmolekularen Dispergatoren z.B. Polyvinylalkohol oder styrolmaleinsaures Natrium kommen auch Pulverdispergatoren in Frage, z.B. in situ erzeugtes Aluminiumhydroxid. (Vgl. hierzu auch die deutsche Patentanmeldung P 3 150 730.1 vom 22.12.81 und Houben-Weyl, loc.cit., Band 14/1, pp. 406–429).

So wird in einem Ansatz mit 1000 ml destilliertem Wasser, enthaltend einen der oben genannten Dispergatoren, eine Monomer-, Regler-, Initiatormischung bestehend aus

245 g p-Methylstyrol
5 g m-Methylstyrol
250 g Methylmethacrylat
7 g Benzoylperoxid (70%ig)
3 g 2-Ethylhexylthioglykolat

10 Stunden bei 80 °C gerührt.

Dabei ist darauf zu achten, dass durch die teilweise Hydrolyse des Benzoylperoxids der pH-Wert nicht so weit abgesenkt wird, dass die Dispergatoren unwirksam werden. Nach Beendigung der Polymerisation wird gekühlt, das Perlpolymerisat mit destilliertem Wasser gewaschen und getrocknet. Es resultieren gut rieselfähige, klare Perlpolymerisate.

Die Wasseraufnahme der Polymerisate kann vorteilhaft direkt an den Perlen durchgeführt werden. (Vgl. Tab. 1 und Abb. 1).

Zur Herstellung von Spritzgussplatten wird aus den Perlen zuvor ein Gleichkorngranulat hergestellt. Auch für die Herstellung von Extrudaten wird von einem Gleichkorngranulat ausgegangen. Die Schlagzähigkeit dieses Polymerisats beträgt 12 mmN/mm$^2$. Zur Wasseraufnahme der Perlpolymerisate siehe Tab. 1.

Aus diesem Perlpolymerisat erzeugt man eine 2 mm dicke Spritzpressplatte. Die Vicat-Erweichungstemperatur dieses Materials beträgt 99 °C, die Lichtdurchlässigkeit der Platte im Bereich von 500–700 nm beträgt > 85%.

Beispiel 2

Man verfährt wie in Beispiel 1, wählt jedoch eine andere Monomerenzusammensetzung:

250 g p-Methylstyrol
50 g Methylacrylat
200 g Methylmethacrylat
7 g Benzoylperoxid (70%ig)
3 g 2-Ethylhexylthioglykolat

Es wird 12 h bei 80 °C polymerisiert.

Wasseraufnahme siehe Tabelle 1.

Vicat-Erweichungstemperatur: 92 °C, die Lichtdurchlässigkeit einer 2 mm dicken Spritzpressplatte beträgt wie im Beispiel 1 im Bereich 500–700 nm > 85%.

Beispiel 3

Man wiederholt den Polymerisationsansatz gemäss Beispiel 1, wählt jedoch eine andere Monomerenzusammensetzung:

400 g Methylmethacrylat
100 g p-Methylstyrol
4 g Benzoylperoxid (70%ig)
3 g 2-Ethylhexylthioglykolat

Es wird 5 h bei 80 °C und danach 1 h bei 90 °C polymerisiert. Wasseraufnahme siehe Tabelle 1.

Vicat-Erweichungstemperatur: 100 °C, optische Eigenschaften einer 2 mm dicken Spritzpressplatte. Lichtdurchlässigkeit im Bereich von 500–700 nm: > 90%.

Beispiel 4 Polymerisation in Substanz

Die Polymerisation einer Monomermischung, bestehend aus 800 g p-Methylstyrol, 800 g Methylmethacrylat und 1 g t-Dodecylmercaptan erfolgt bei 60–90 °C mit Hilfe von Initiatormischungen wie Lauroylperoxid/Benzoylperoxid. Wird die Polymerisation bei Temperatur von über 90 °C durchgeführt, so sind entsprechende höher zerfallende

Starter zu verwenden. Die Polymerisation wird dabei direkt zu den gewünschten Formkörpern durchgeführt. In diesem Fall ist es besonders einfach möglich, Formkörper mit geringer Doppelbrechung (z.B. Gangunterschied < 10 nm) zu erzeugen.

Beispiel 5

Polymerisation in Substanz bis zu einem unvollständigen Umsatz. Eine Mischung, bestehend aus 80 g Methylmethacrylat, 64 g p-Methylstyrol, 16 g Styrol, 0,2 g Dodecylmercaptan, 0,2 g Dilaurylperoxid und 0,2 g Dibenzoylperoxid wird unter Stickstoff bei 80 °C bis zu einem Umsatz von ca. 40% polymerisiert. Anschliessend wird die Polymerlösung mit Methylenchlorid verdünnt und das Polymerisat durch Eintropfen in die 10-fache Menge an Äthanol ausgefällt. Danach wird bei 60 °C im Vakuum getrocknet.

Die Wasseraufnahme (direkt gemessen am Fällungspolymerisat) beträgt: 0,45 Gew.-%.

Eigenschaften einer 2 mm dicken Pressplatte: Vicat-Erweichungstemperatur 94 °C, Lichtdurchlässigkeit (500–700 nm): > 80%, Gangunterschied: < 10 nm.

Beispiel 6

Man verfährt wie in Beispiel 5, wählt jedoch eine andere Monomerenzusammensetzung:

100 g Methylmethacrylat
40 g p-Methylstyrol
20 g 3-Phenylpropylmethacrylat

Die Polymerisation erfolgt wie in Beispiel 6 nun zu einem Umsatz von ca. 40%, danach weich gefällt (Methanol) und getrocknet. Wasseraufnahme (gemessen am Fällungspolymerisat: 0,78 Gew.-%). Eigenschaften einer 2 mm dicken Pressplatte: 89 °C, Gangunterschied (Doppelbrechung): < 10 nm, Lichtdurchlässigkeit (500–700 nm): > 90%.

Beispiel 7 Polymerisation direkt zur Datenträgerplatte unter Zusatz von Vernetzern

Man verfährt wie in Beispiel 4, verzichtet jedoch auf den Zusatz von Polymerisationsregler und wählt eine andere Monomerenzusammensetzung:

70 Gew.-% p-Methylstyrol
0,2 Gew.-% Butandioldimethacrylat
29,8 Gew.-% Methylmethacrylat

Diese Monomeren/Initiatormischung wird direkt zu einer ca. 1,8 mm dicken Platte polymerisiert.

Eigenschaften der 1,8 mm dicken Platte: Wasseraufnahme (Sättigung bei Wasserlagerung): 0,3 Gew.-%.

Vicat-Erweichungstemperatur: 102 °C, Gangunterschied (Doppelbrechung) < 3 nm, Lichtdurchlässigkeit (500–700 nm): > 85%.

Tab. 1 Charakterisierung der p-Methylstyrol haltigen Copolymerisate

| Beispiel Nr. | Zusammensetzung Polymerisate (Gew.-%) | | | | | Wasseraufnahme*) (%) | |
|---|---|---|---|---|---|---|---|
| | p.MS | mMS | S | MMA | MA | grav. | KF |
| 1 | 49 | 1 | – | 50 | – | 0,45 | 0,42 |
| 2 | 50 | – | – | 40 | 10 | 0,50 | 0,46 |
| 3 | 20 | – | – | 80 | – | 0,86 | 0,84 |
| 4 | 50 | – | – | 50 | – | 0,48 | – |

p.MS: p-Methylstyrol
mMS: m-Methylstyrol
MMA: Methylmethacrylat
MA : Methylacrylat

*)Klima: DIN 50 015 (feucht), 23 °C / 83% ~F
**)Gravimetrisch bzw. nach Karl Fischer

**Patentansprüche**

1. Polymerisate mit geringem Wasseraufnahmevermögen und guten optischen und mechanischen Eigenschaften, dadurch gekennzeichnet, dass sie

A) 10–90 Gew.-% p-Methylstyrol, zusammen mit wenigstens einer der Komponenten B, C, D, E, F, gegebenenfalls zusätzlich G enthalten, wobei die Mengenangaben wie folgt sind:

B) 0–50 Gew.-% eines oder mehrerer aromatische Gruppen enthaltender Monomeren der Formel I

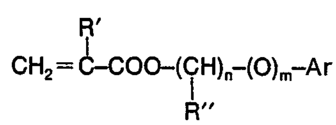

I

worin

R′ für Wasserstoff oder Methyl

R″ für Wasserstoff oder einen Alkylrest mit 1–7 Kohlenstoffatomen

Ar für einen aromatischen Kohlenwasserstoff
n für eine Zahl von 0–6
m für 0 oder 1 mit der Massgabe, dass m und n nicht gleichzeitig 1 sein sollen, und wenn n für 0 steht, auch m für 0 stehen soll,

C) 0–20 Gew.-% einer oder mehrerer aromatischer Vinylverbindungen der Formel II

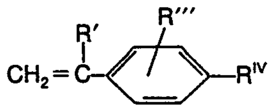
II

worin
R′ für Wasserstoff oder Methyl
R‴ für Wasserstoff oder einen Alkylrest mit 1 bis 4 Kohlenstoffatomen und
$R^{IV}$ für Wasserstoff oder einen Alkylrest mit 2 bis 4 Kohlenstoffatomen stehen.

D) 0–80 Gew.-% Methylmethacrylat,
E) 0–50 Gew.-% eines oder mehrerer Monomerer der Formel III

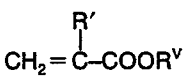
III

worin
R′ die oben bezeichnete Bedeutung besitzt und
$R^V$ für einen gegebenenfalls verzweigten Kohlenwasserstoffrest mit 1 bis 20 Kohlenstoffatomen oder einen cyclischen, nichtaromatischen Kohlenwasserstoff mit mindestens 5 Ringkohlenstoffatomen und bis zu 12 Kohlenstoffatomen mit der Massgabe, dass R′ und $R^V$ nicht gleichzeitig für Methyl stehen sollen,

F) 0–30 Gew.-% weiterer Comonomerer, deren Löslichkeit den Wert 50 g Monomer pro Liter Wasser bei 25 °C nicht überschreitet und
G) 0–10 Gew.-% weiterer, gegebenenfalls vernetzender Monomere

2. Polymerisate nach Anspruch 1, dadurch gekennzeichnet, dass die Wasseraufnahme der so hergestellten Polymerisate unter den Bedingungen von DIN 50 015 unterhalb 1 Gew.-%, vorzugsweise unterhalb 0,8 Gew.-%, besonders bevorzugt unterhalb 0,5 Gew.-% liegt.

3. Polymerisate gemäss den Ansprüchen 1 und 2, dadurch gekennzeichnet, dass die Doppelbrechung der daraus hergestellten Formkörper niedrig ist (Gangunterschied unterhalb 100 nm, vorzugsweise unterhalb 30 nm).

4. Polymerisate gemäss den Ansprüchen 1 bis 3, dadurch gekennzeichnet, dass sie ein mittleres Molekulargewicht von grösser 50 000 besitzen.

5. Polymerisate gemäss den Ansprüchen 1 bis 4, dadurch gekennzeichnet, dass die Glastemperatur der Polymerisate über 70 °C, vorzugsweise über 85 °C, liegt.

6. Polymerisate gemäss den Ansprüchen 1 bis 5, dadurch gekennzeichnet, dass die Lichtdurchlässigkeit einer 3 mm dicken Probe, gemessen nach DIN 5036 bei > 80%, vorzugsweise > 85%, liegt.

7. Verfahren zur Herstellung von Polymerisaten gemäss den Ansprüchen 1 bis 6, durch radikalische Polymerisation der Monomeren.

8. Verfahren zur Herstellung von Formmassen, dadurch gekennzeichnet, dass man die Polymerisate gemäss den Ansprüchen 1 bis 6 verwendet.

9. Verfahren zur Herstellung von Trägern optisch abzulesender Information, dadurch gekennzeichnet, dass man die Polymerisate gemäss den Ansprüchen 1 bis 6 verwendet.

10. Verfahren zur Herstellung von optisch abzulesenden Informationsspeicherplatten, dadurch gekennzeichnet, dass man die Polymerisate gemäss den Ansprüchen 1 bis 6 verwendet.

**Claims**

1. Polymers with low water absorption qualities and good optical and mechanical properties, characterised in that they contain

A) 10–90% by weight of p-methylstyrene, together with at least one of the components B, C, D, E, F, and optionally G as well, the quantities being as follows:
B) 0–50% by weight of one or more monomers of formula I

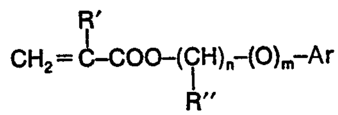
I

containing aromatic groups,
wherein R′ represents hydrogen or methyl
R″ represents hydrogen or an alkyl group with 1–7 carbon atoms
Ar represents an aromatic hydrocarbon
n represents a number from 0–6
m represents 0 or 1, with the proviso that m and n cannot both represent 1 at the same time and, if n represents 0, m should also represent 0,

C) 0–20% by weight of one or more aromatic vinyl compounds of formula II

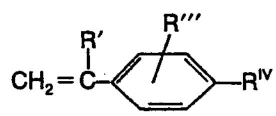
II

wherein R′ represents hydrogen or methyl
R‴ represents hydrogen or an alkyl group with 1 to 4 carbon atoms and
$R^{IV}$ represents hydrogen or an alkyl group with 2 to 4 carbon atoms.

D) 0–80% by weight of methylmethacrylate,
E) 0–50% by weight of one or more monomers of formula III

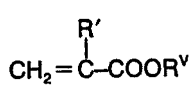
III

wherein R′ is defined as hereinbefore and
$R^V$ represents an optionally branched hydrocarbon group with 1 to 20 carbon atoms or a cyclic, non-aromatic hydrocarbon with at least 5 cyclic carbon atoms and up to 12 carbon atoms, with the

proviso that R′ and $R^V$ cannot simultaneously represent methyl,

F) 0–30% by weight of other comonomers the solubility of which does not exceed a value of 50 g of monomer per litre of water at 25 °C and

G) 0–10% by weight of other, optionally crosslinking monomers.

2. Polymers as claimed in claim 1, characterised in that the water uptake of the polymers thus prepared is below 1% by weight, preferably below 0.8% by weight, most preferably below 0.5% by weight under the conditions of DIN 50 015.

3. Polymers as claimed in claims 1 and 2, characterised in that the birefringence of the mouldings produced therefrom is low (difference in pitch less than 100 nm, preferably less than 30 nm).

4. Polymers as claimed in claims 1 to 3, characterised in that they have an average molecular weight of above 50,000.

5. Polymers as claimed in claims 1 to 4, characterised in that the glass temperature of the polymers is above 70 °C, preferably above 85 °C.

6. Polymers as claimed in claims 1 to 5, characterised in that the permeability to light of a 3 mm thick testpiece, measured according to DIN 5036, is more than 80%, preferably more than 85%.

7. Process for preparing polymers as claimed in claims 1 to 6 by radical polymerisation of the monomers.

8. Process for preparing moulding compositions, characterised in that the polymers as claimed in claims 1 to 6 are used.

9. Process for producing carriers for information which is to be read optically, characterised in that the polymers as claimed in claims 1 to 6 are used.

10. Process for producing information storage plates which are to be read optically, characterised in that the polymers as claimed in claims 1 to 6 are used.

**Revendications**

1. Polymères ayant un faible pouvoir d'absorption d'eau et de bonnes propriétés optiques et mécaniques, caractérisés en ce qu'ils contiennent

A) 10 à 90% en poids de p-méthylstyrène en combinaison avec l'un au moins des composants B, C, D, E, F et en plus, le cas échéant, G, dans les proportions indiquées ci-après:

B) 0 à 50% en poids d'un ou de plusieurs monomères contenant des groupes aromatiques, de formule I

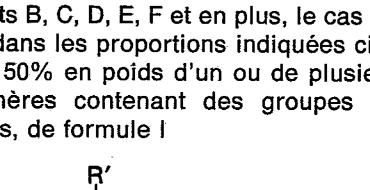 I

dans laquelle

R′ est mis pour un atome d'hydrogène ou un groupe méthyle

R″ pour un atome d'hydrogène ou un radical alkyle à 1–7 atomes de carbone,

Ar pour un hydrocarbure aromatique,

n pour un nombre de 0 à 6,

m pour 0 ou 1, avec cette condition que m et n ne doivent pas être mis en même temps pour 1 et que quand n est mis pour 0, m doit être mis lui aussi pour 0,

C) 0 à 20% en poids d'un ou de plusieurs composés vinyl-aromatiques de formule II

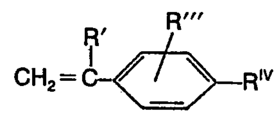 II

dans laquelle

R′ est mis pour un atome d'hydrogène ou un groupe méthyle

R‴ pour un atome d'hydrogène ou un radical alkyle à 1–4 atomes de carbone et

$R^{IV}$ pour un atome d'hydrogène ou un radical alkyle à 2–4 atomes de carbone,

D 0 à 80% en poids de méthacrylate de méthyle,

E) 0 à 50% en poids d'un ou de plusieurs monomères de formule III

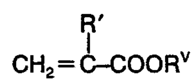 III

dans laquelle

R′ a la signification donnée ci-dessus,

$R^V$ est mis pour un radical hydrocarboné à 1–20 atomes de carbone éventuellement ramifié ou pour un radical cyclique non aromatique comportant au moins 5 atomes de carbone dans le noyau et jusqu'à 12 atomes de carbone, avec cette condition que R′ et $R^V$ ne doivent pas être mis en même temps pour un radical méthyle,

F) 0 à 30% en poids d'autres comonomères dont la solubilité ne dépasse pas la valeur de 50 g de monomère par litre d'eau à 25 °C, et

G) 0 à 10% en poids d'autres monomères éventuellement réticulants.

2. Polymères selon la revendication 1, caractérisés en ce que l'absorption d'eau des polymères ainsi préparés, dans les conditions de la DIN 50 015, se situe au-dessous de 1% en poids, de préférence au-dessous de 0,8% en poids et, de façon particulièrement préférée, au-dessous de 0,5% en poids.

3. Polymères selon la revendication 1 ou 2, caractérisés en ce que la biréfringence des corps moulés qui sont fabriqués à partir d'eux est faible (différence des chemins inférieure à 100 nm, de préférence inférieure à 30 nm).

4. Polymères selon l'une quelconque des revendications 1 à 3, caractérisés en ce qu'ils ont un poids moléculaire moyen de plus de 50 000.

5. Polymères selon l'une quelconque des revendications 1 à 4, caractérisés en ce que la température de transition vitreuse des polymères se situe au-dessus de 70 °C, de préférence au-dessus de 85 °C.

6. Polymères selon l'une quelconque des revendications 1 à 5, caractérisés en ce que la transparence d'une éprouvette de 3 mm d'épaisseur, mesurée suivant la DIN 5036, se situe au-dessus de 80%, de préférence au-dessus de 85%.

7. Procédé pour la préparation de polymères

selon l'une quelconque des revendications 1 à 6, par polymérisation radicalaire des monomères.

8. Procédé pour la préparation de matières à mouler, caractérisé en ce qu'on utilise les polymères selon l'une quelconque des revendications 1 à 6.

9. Procédé pour la fabrication de supports d'informations à lecture optique, caractérisé en ce qu'on utilise les polymères selon l'une quelconque des revendications 1 à 6.

10. Procédé pour la fabrication de disques de mémorisation d'informations à lecture optique, caractérisé en ce qu'on utilise les polymères selon l'une quelconque des revendications 1 à 6.

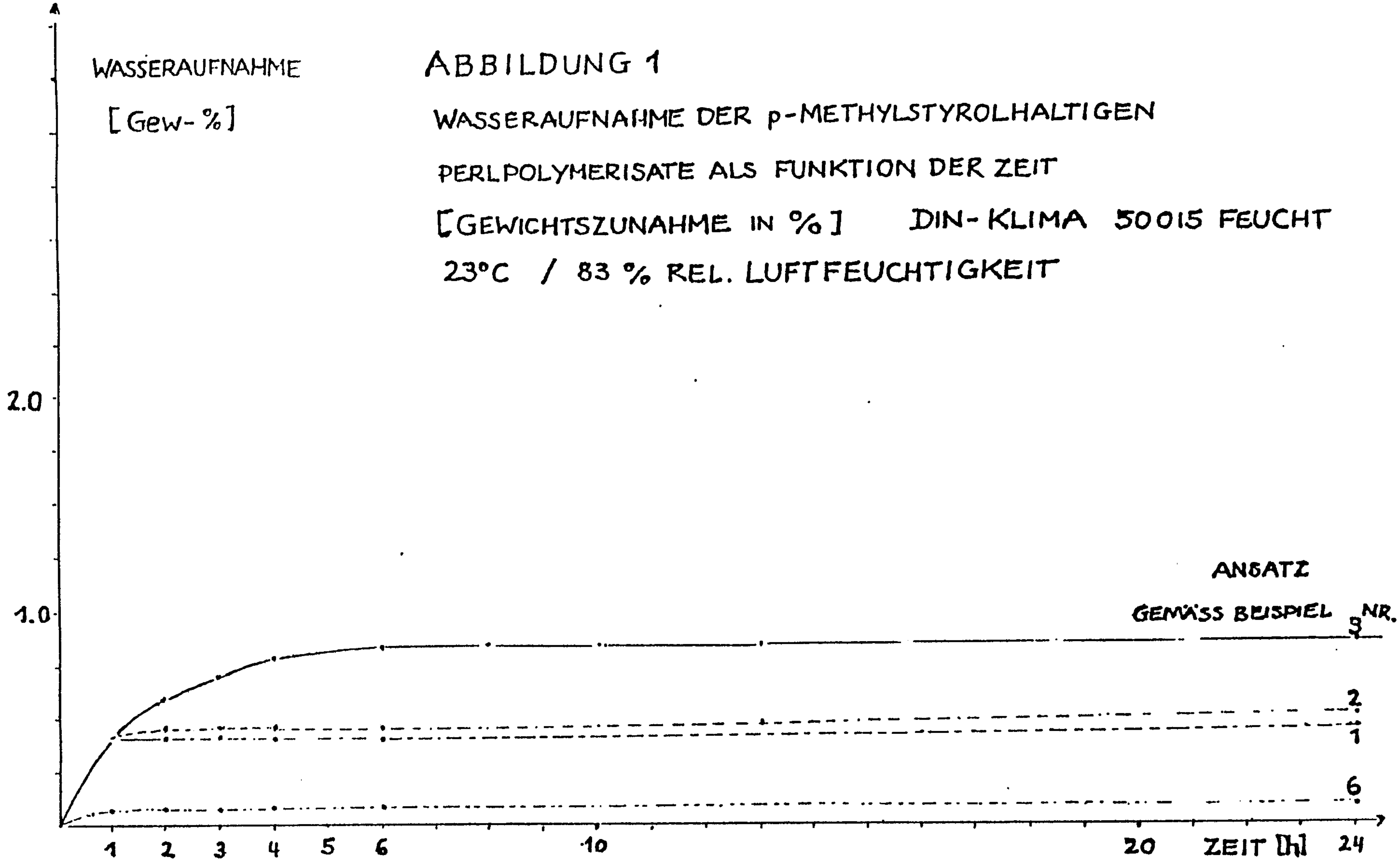
WASSERAUFNAHME
[Gew-%]
ABBILDUNG 1
WASSERAUFNAHME DER p-METHYLSTYROLHALTIGEN
PERLPOLYMERISATE ALS FUNKTION DER ZEIT
[GEWICHTSZUNAHME IN %]   DIN-KLIMA 50015 FEUCHT
23°C / 83 % REL. LUFTFEUCHTIGKEIT
2.0
1.0
ANSATZ
GEMÄSS BEISPIEL NR.
3
2
1
6
1 2 3 4 5 6 10 20 24
ZEIT [h]